# EUROPEAN PATENT APPLICATION

(11) **EP 2 317 751 A1**
(43) Date of publication of application: **04.05.2011**
(21) Application number: 10175503.1
(22) Date of filing: 06.09.2010
(51) Int. Cl.: H04N 1/23, H04N 1/44, H04N 1/00, H04N 1/387

(54) **Image forming apparatus, image forming system, and management method for image forming apparatus**

(30) Priority: 30.10.2009 US 256530 P
(71) Applicant: Kabushiki Kaisha Toshiba, Tokyo 105-8001 (JP); Toshiba TEC Kabushiki Kaisha, Tokyo 141-8664 (JP)
(72) Inventor: Makishima, Shinji, Shinagawa-ku Tokyo 141-8664 (JP); Ogura, Kazuhiro, Shinagawa-ku Tokyo 141-8664 (JP); Mizutani, Akihiro, Shinagawa-ku Tokyo 141-8664 (JP); Ida, Toshihiro, Shinagawa-ku Tokyo 141-8664 (JP); Hamada, Yusuke, Shinagawa-ku Tokyo 141-8664 (JP)
(74) Representative: Gendron, Vincent Christian

(57) **Abstract**

According to one embodiment, an image forming apparatus (1) includes an acquisition unit (ACT201), an issuing unit (ACT204, ACT305), an image creating unit (ACT206, ACT309), a code creating unit (ACT208, ACT312), a first storage unit (24c, ACT205, ACT306), and an image forming unit (9, ACT209, ACT313, ACT105). The acquisition unit acquires plural images. The issuing unit issues identification information for each image acquired by the acquisition unit. The image creating unit creates one image for image formation in which the plural images for which the identification information is issued by the issuing unit are arranged. The code creating unit creates one code image by encoding information including the plural pieces of identification information for the plural images arranged in the image for image formation. The first storage unit stores the number of times of image formation for each image arranged in the image for image formation, in association with the identification information for each image issued by the issuing unit. The image forming unit forms an image including the image for image formation and the code image on one sheet.

## Description

### FIELD

Embodiments described herein relate generally to an image forming apparatus, an image forming system, and a management method for image formation.

### BACKGROUND

There is an image forming system which has the function of printing identification information together with an image on a sheet and managing the sheet on which the image is printed, by using the identification information. However, with the conventional image forming system, it is difficult to manage each image in the case of printing plural images on one sheet.

### BRIEF DESCRIPTION OF THE DRAWINGS

FIG. 1 schematically shows an exemplary configuration of an image forming system.
FIG. 2 is a block diagram showing an exemplary configuration of control systems of a digital multi-function peripheral and a server.
FIG. 3A shows an example of image printing.
FIG. 3B shows an example of image printing.
FIG. 4 shows an exemplary configuration of a document management table.
FIG. 5 shows an exemplary configuration of a page management table.
FIG. 6 shows an exemplary configuration of a print management table.
FIG. 7A shows an exemplary original to be copied in an integrated manner (4 in 1 copy).
FIG. 7B shows an exemplary sheet on which integrated copy (4 in 1 copy) is done.
FIG. 8A shows an exemplary configuration of identification information for 4 in 1 print.
FIG. 8B shows an exemplary configuration of identification information for 4 in 1 print.
FIG. 9 is a flowchart for explaining a first example of processing for N in 1 copy in the digital multi-function peripheral.
FIG. 10A shows an exemplary display of an operation screen in a standby state which is displayed on an operation panel when user authentication is successful.
FIG. 10B shows an exemplary display of a copy setting screen.
FIG. 11 is a flowchart for explaining a first example of processing for N in 1 copy in a print server.
FIG. 12 shows an exemplary original including six sheets and six images, with each image printed on one sheet.
FIG. 13 shows an exemplary original including two sheets on which six images are printed by 4 in 1 print.
FIG. 14 is a flowchart for explaining a second example of processing for N in 1 copy.
FIG. 15 shows an exemplary result of output based on copy processing including first output adjustment.
FIG. 16 is a flowchart for explaining the first output adjustment.
FIG. 17 shows an exemplary result of output based on copy processing including second output adjustment.
FIG. 18 shows an exemplary result of output based on copy processing including third output adjustment.
FIG. 19 is a flowchart for explaining the second output adjustment and third output adjustment.

### DETAILED DESCRIPTION

In general, according to one embodiment, an image forming apparatus includes an acquisition unit, an issuing unit, an image creating unit, a code creating unit, a first storage unit, and an image forming unit. The acquisition unit acquires plural images. The issuing unit issues identification information for each image acquired by the acquisition unit. The image creating unit creates one image for image formation in which the plural images for which the identification information is issued by the issuing unit are arranged. The code creating unit creates one code image by encoding information including the plural pieces of identification information for the plural images arranged in the image for image formation. The first storage unit stores the number of times of image formation for each image arranged in the image for image formation, in association with the identification information for each image issued by the issuing unit. The image forming unit forms an image including the image for image formation and the code image on one sheet.

Hereinafter, an embodiment will be described in detail with reference to the drawings.

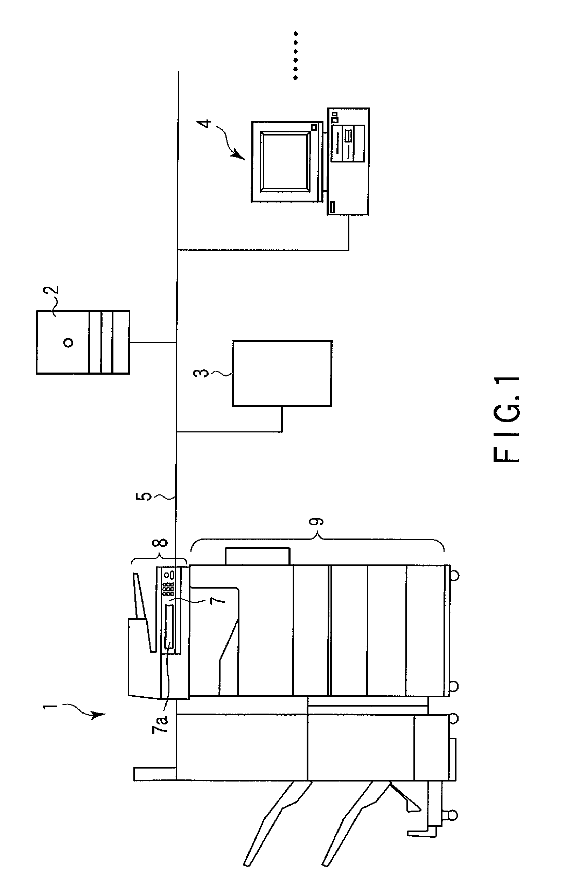

FIG. 1 schematically shows an exemplary configuration of an image forming system.

As shown in FIG. 1, the image forming system includes a digital multi-function peripheral 1, a print server 2, a user management server 3, and a user terminal 4. In the image forming system, the digital multi-function peripheral 1, the print server 2, the user management server 3 and the user terminal 4 are connected by a local area network 5.

The digital multi-function peripheral (MFP) 1 functions as an image forming apparatus (printing apparatus). The digital multi-function peripheral 1 has a scanner function, a printer function, a network communication function and the like. The digital multi-function peripheral 1 has a communication function to communicate data with each device (the print server 2, the user management server 3 and the user terminal 4) via each local area network 5. For example, the digital multi-function peripheral 1, as a network printer, executes printing that is requested by the user terminal 4.

The print server 2 is a server computer. The print server 2 has the function of communicating data with each device via each local area network 5. The print server 2 manages print jobs requested by each device. The user management server 3 is a server computer. The user management server 3 has the function of communicating data with each device via the local area network 5. The user management server 3 manages user information.

The user terminal 4 is a terminal device used by a user. The user terminal 4 has a communication function to communicate data with each device via the local area network 5. The user terminal 4 may be any device that can communicate data via the local area network 5. The user terminal 4 may be, for example, a personal computer or a portable terminal device. The local area network 5 may be realized by wireless communication.

Next, the configuration of the digital multi-function peripheral 1 will be schematically described.

As shown in FIG. 1, the digital multi-function peripheral 1 has an operation panel 7, a scanner (image scanning unit) 8, a printer (image forming unit) 9 and the like. The digital multi-function peripheral 1 also has various external interfaces to input and output image data. The digital multi-function peripheral 1 functions as a copier, scanner, printer or network communication machine.

The scanner 8 scans an image on an original surface as color image data or monochrome image data. The scanner 8 scans the image on the original surface by optically scanning the original surface. The scanner 8 includes a scanning mechanism, a photoelectric conversion unit, an automatic document feeder (ADF) and the like.

The printer 9 forms a color image or monochrome image on a sheet. For example, the printer 9 is an electrographic image forming apparatus. The printer 9 includes a sheet housing unit, a carrying mechanism, an exposure device, a photoconductive drum, a developing device, a transfer belt, a transfer device, a fixing device and the like. In the printer 9, the carrying mechanism carries a sheet that is set in the sheet housing unit. The exposure device forms a latent image on the photoconductive drum. The developing device develops the latent image on the photoconductive drum with a toner (in the case of color image, toners of individual colors). The transfer device transfers the toner image on the photoconductive drum developed by the developing device, to the sheet via the transfer belt. The fixing device fixes the toner image onto the sheet, for example, by heating the sheet in a pressurized state. The carrying mechanism outputs the sheet to which the toner image is fixed, as a result of printing. The printer 9 is not limited to the electrographic system and may be configured to form images by using another printing system such as an ink jet system or thermal transfer system.

The operation panel 7 is a user interface. The operation panel 7 has, for example, a display section 7a in which various operation keys and a touch panel are provided. The operation panel 7 functions as an operation unit for the user to input an operation instruction, and as a display unit which displays guidance or the like to the user. For example, the operation panel 7 is used by the user to input a request (application) for change of machine settings.

Next, the configuration of the control system of the digital multi-function peripheral 1 will be described.

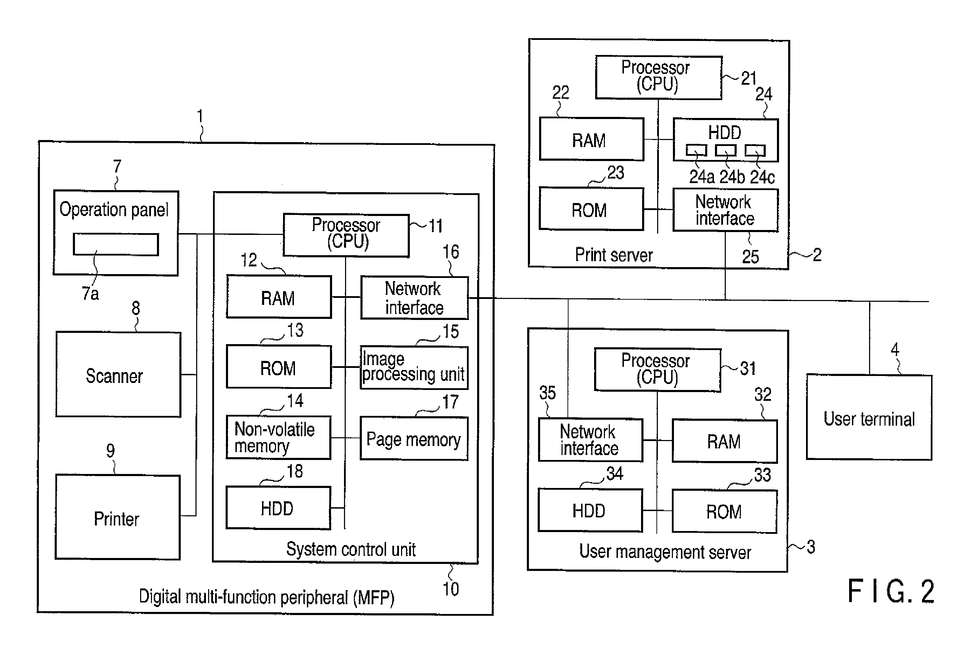

FIG. 2 is a block diagram showing an exemplary configuration of the control systems of the digital multi-function peripheral 1, the print server 2 and the user management server 3.

As shown in FIG. 2, the digital multi-function peripheral 1 has a system control unit 10 which generally controls each unit. For example, the system control unit 10 controls the scanner 8 and the printer 9. The system control unit 10 acquires information inputted by the user or manager from the operation panel 7 or the user terminal 4. The system control unit 10 has a processor (CPU) 11, a random access memory (RAM) 12, a read only memory (ROM) 13, a non-volatile memory 14, an image processing unit 15, a network interface 16, a page memory 17, a hard disk drive (HDD) 18, a timer 19 and the like.

The processor 11 is, for example, a CPU. The processor 11 executes a control program stored in the ROM 13, the non-volatile memory 14 or the HDD 18 and thus realizes various processing functions. The RAM 12 is a main memory which functions as a working memory. The ROM 13 stores a control program, control data and the like to control the operation of the digital multi-function peripheral 1. The non-volatile memory 14 is a rewritable non-volatile memory. The non-volatile memory 14 stores a control program and control data to realize various processing functions. For example, the non-volatile memory 14 holds setting information.

The image processing unit 15 processes image data scanned by the scanner 8 or image data received via a network. The network interface 16 is an interface to communicate with an external device via the local area network 5. The page memory 17 is a memory having a storage area where image data equivalent to at least one page is unfolded. The HDD 18 is a large-capacity memory to store data. The HDD 18 stores, for example, image data to be printed.

Next, the configuration of the print server 2 will be described.

As shown in FIG. 2, the print server 2 has a processor (CPU) 21, a RAM 22, a ROM 23, an HDD 24, a network interface (I/F) 25, and a timer 26.

The processor 21 is, for example, a CPU. The processor 21 is responsible for controlling the entire server 2. The processor 21 executes a program stored in the ROM 23 or the HDD 24 and thus realizes various processing functions. The RAM 22 is a working memory. The ROM 23 stores a control program, control data and the like to control the basic operation of the server 2. The network interface 25 is an interface for communication data with each device within the local area network 5.

The HDD 24 is a storage device to store data. The HDD 24 stores information for managing images to be printed, in the entire system. The HDD 24 has, for example, a document management table 24a, a page management table 24b, and a print management table 24c. The document management table 24a stores information about a document (original) to be printed. The document management table 24a stores, for example, information indicating limitations on copying of a document. The page management table 24b stores information about each page to be printed. The page management table 24b stores, for example, the security level for the image on each page. The print management table 24c stores information about a printed image. The print management table 24c stores, for example, information indicating the number of generations about each printed image.

In the print server 2, the processor 21 has an image analysis function, a barcode processing function, an image data creating function, an identification information creating function, a print data creating function, an image management function and the like. These functions are realized as the processor 21 executes programs. The barcode processing function is the function of processing barcode information (barcode image). The barcode processing function is to extract a barcode image from an image, decode a barcode image to information, and encode information to a barcode. The identification information creating function is to create identification information for identifying an image. The image data creating function is the function of creating print image data to be printed on one sheet. The image data creating function is to create print image data in which images corresponding to the number of integrated images are arranged in integrated print. The print data creating function is to create print data printed on a sheet in the digital multi-function peripheral 1. For example, the print data creating function combines a barcode image with one image data (adds barcode information) and thus creates print data. The image management function is to manage an image to be printed, in accordance with the information stored in the HDD 24. The image management function, for example, manages the limitations on the number of times of copying for each image, and so on.

The digital multi-function peripheral 1 or the user management server 3 may have a part or all of the functions provided in the print server 2. For example, the barcode processing function, the image data creating function, the identification information creating function, the print data creating function and the image management function may be realized by the processor 11 of the digital multi-function peripheral 1 or by a processor 31 of the user management server 3. The tables 24a, 24b and 24c may also be provided in the HDD 18 of the digital multi-function peripheral 1 or in an HDD 34 of the user management server 3.

Next, the configuration of the user management server 3 will be described.

As shown in FIG. 2, the user management server 3 has a processor (CPU) 31, a RAM 32, a ROM 33, an HDD 34, and a network interface (I/F) 35.

The processor 31 is, for example, a CPU. The processor 31 is responsible for controlling the entire server 3. The processor 31 executes a program stored in the ROM 33 or the HDD 34 and thus realizes various processing functions. The RAM 32 is a working memory. The ROM 33 stores a control program, control data and the like to control the basic operation of the server 3. The HDD 34 is a storage device to store data. The HDD 34 stores, for example, data for user authentication. The network interface 35 is an interface for communication of data with each device within the local area network 5.

In the user management server 3, the processor 31 has a user authentication function. This function is realized as the processor 31 executes a program. The user authentication function is to authenticate a user. The user authentication function acquires authentication information such as the user ID or password inputted by the user on the operation panel 7 of the digital multi-function peripheral 1. The user authentication function authenticates the user on the basis of the authentication information acquired from the digital multi-function peripheral 1 and the data for user authentication stored in the HDD 34. Alternatively, the user authentication function may acquire information of an IC card owned by the user from the digital multi-function peripheral 1 and thus authenticate the user.

The digital multi-function peripheral 1 or the print server 2 may have a part or all of the functions provided in the user management server 3. For example, the user authentication function may be realized by the processor 11 of the digital multi-function peripheral 1 or by the processor 21 of the print server 2. The data for user authentication may be stored in the HDD 18 of the digital multi-function peripheral 1 or in the HDD 24 of the print server 2.

Hereinafter, print management in the image forming system will be described.

This image forming system manages an image to be printed on a sheet. The image forming system manages generation information (for example, the number of times of image formation) of an image to be printed on a sheet. The image forming system can limit printing of the image using the generation information. The image forming system issues a print ID as identification information for printing every time an image is copied or printed. The print ID is, for example, information that can be converted to code information such as two-dimensional barcode. The image forming system prints barcode information acquired by converting the information including the print ID to a barcode, on a sheet together with the image. The image forming system realizes the management of generation information for the image printed on the sheet on the basis of the print ID acquired from the barcode information printed on the sheet. The print ID may be any ID convertible to information (image) that can be printed on the sheet together with the image.

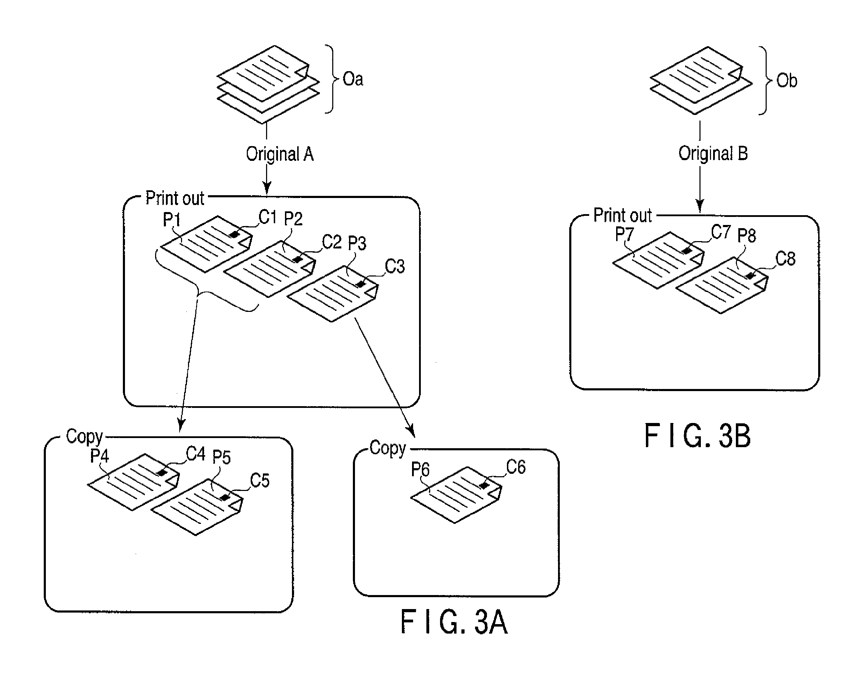

FIG. 3A and FIG. 3B show examples of printing or copying an image and barcode information indicating a print ID.

First, in the example shown in FIG. 3A, the digital multi-function peripheral 1 prints an original Oa consisting of three pages. When the digital multi-function peripheral 1 prints the original Oa, the print server 2 issues identification information for an image on each page of the original Oa. The print server 2 converts the identification information for the images on the individual pages to barcode information (barcode images) C1, C2 and C3. The print server 2 supplies the barcode information C1, C2 and C3 to the digital multi-function peripheral 1 in association with their respective images on the original Oa to be printed. The print server 2 stores the identification information of each image in the print management table 24c in association with the number of generations (the number of times of print).

The digital multi-function peripheral 1 prints the barcode information C1, C2 and C3 issued by the print server 2, on sheets together with the images on the individual pages of the original Oa. The digital multi-function peripheral 1 prints the barcode information C1, C2 and C3, for example, at a reference position on each sheet. In the example shown in FIG. 3A, the digital multi-function peripheral 1 generates a sheet P1 on which the barcode information C1 is printed at a top right part of the image on the first page of the original Oa, a sheet P2 on which the barcode information C2 is printed at a top right part of the image on the second page of the original Oa, and a sheet P3 on which the barcode information C3 is printed at a top right part of the image on the third page of the original Oa.

Moreover, when copying the sheet P1 and the sheet P2, the digital multi-function peripheral 1 scans the sheet P1 and the sheet P2 and converts the images to scanned image data. The digital multi-function peripheral 1 transfers the scanned images (the image on the sheet P1 and the image on the sheet P2) to the print server 2. The print server 2 extracts the barcode information from each of the scanned images on the sheet P1 and the sheet P2. The print server 2 determines the print ID of each image on the basis of the extracted barcode information. The print server 2 confirms the number of times of print for each image on the basis of the determined print ID and determines whether the sheet P1 and the sheet P2 can be copied or not. When it is determined that the sheet P1 and the sheet P2 can be copied, the print server 2 issues two pieces of new identification information.

The print server 2 converts the issued identification information to barcode information (for example, two-dimensional barcodes) C4 and C5. The print server 2 supplies print data including the image on the sheet P1 with the barcode information C4 and print data including the image on the sheet P2 with the barcode information C5, to the digital multi-function peripheral 1. The print server 2 may also supply image data of the original images based on the print ID, as print images, to the digital multi-function peripheral 1. The print server 2 stores the newly issued identification information for each image in the print management table 24c in association the number of generations (the number of times of print).

The digital multi-function peripheral 1 prints (copies) the image on the sheet P1 (or image data of the original image) and the barcode information C4 issued by the print server 2, onto a sheet P4. However, the digital multi-function peripheral 1 prints the print data in which the barcode information C1 in the image on the sheet P1 is replaced by the barcode information C4. The digital multi-function peripheral 1 prints (copies) the image on the sheet P2 (or image data of the original image) and the barcode information C5 issued by the print server 2, onto a sheet P5. However, the digital multi-function peripheral 1 prints the print data in which the barcode information C2 in the image on the sheet P2 is replaced by the barcode information C5.

When copying the sheet P3, the digital multi-function peripheral 1 scans the sheet P3 and transfers the scanned image to the print server 2. The print server 2 extracts the barcode information from the scanned image on the sheet P3 and determines the identification information based on the extracted barcode information. The print server 2 determines whether the sheet P3 can be copied or not, on the basis of the determined identification information and management information which will be described later. When it is determined that the sheet P3 can be copied, the print server 2 issues one piece of new identification information and converts the issued identification information to barcode information (for example, two-dimensional barcode) C6.

The print server 2 supplies print data including the image on the sheet P3 with the barcode information C6, to the digital multi-function peripheral 1. In the print data, the barcode information C3 in the image on the sheet P3 is replaced by the barcode information C6. Therefore, the digital multi-function peripheral 1 prints an image in which the barcode information C3 in the image on the sheet P3 is replaced by the barcode information C6. The print server 2 stores the newly issued identification information for each image in the print management table 24c in association with the number of generations (the number of times of print).

Moreover, in the example shown in FIG. 3B, the digital multi-function peripheral 1 prints an original Ob consisting of two pages. When printing the original Ob, the print server 2 issues new identification information that is different from the previously issued identification information, for the image on each page. The print server 2 converts the issued identification information to barcode information (barcode images) C7 and C8. The print server 2 supplies the barcode information C7 and C8 in association with the original images to be printed, to the digital multi-function peripheral 1. The digital multi-function peripheral 1 prints the barcode information C7 and C8 issued by the print server 2, on a sheet together with the image on each page. In the example shown in FIG. 3B, the digital multi-function peripheral 1 generates a sheet P7 on which the barcode information C7 is printed at a top right part of the image on the first page of the original Ob, and a sheet P8 on which the barcode information C8 is printed at a top right part of the image on the second page of the original Ob.

Next, information managed by the print server 2 will be described.

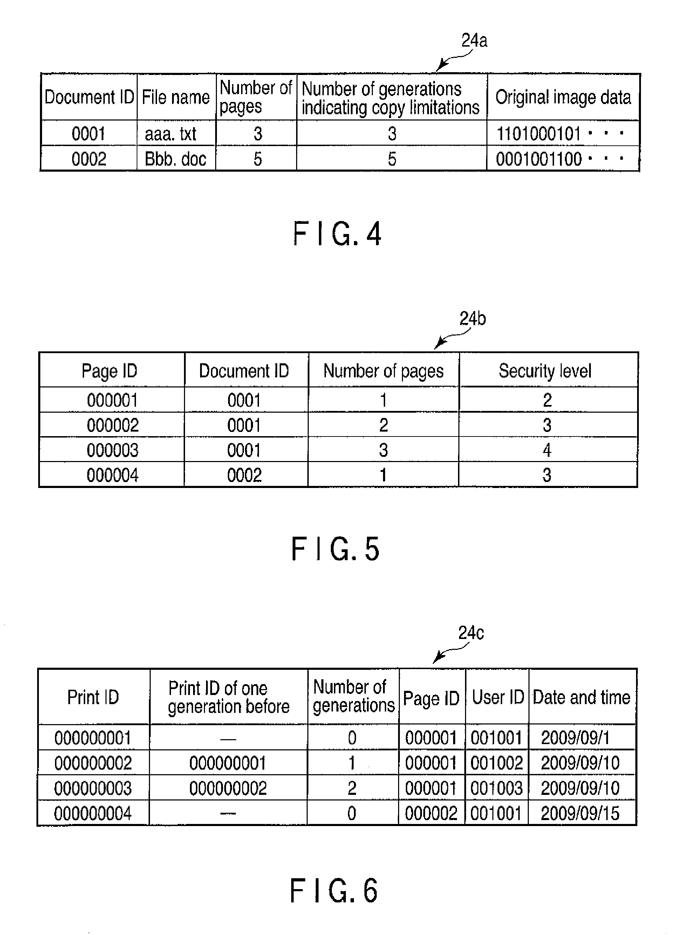

FIG. 4 shows an exemplary configuration of the document management table 24a.

The document management table 24a stores information about a document which is a management target to be printed or copied. A document includes an image or images on one or plural pages. For example, the document management table 24a stores information for identifying a document, security setting information including copy limitations on the entire document, and the like.

In the example shown in FIG. 4, the document management table 24a stores document IDs, file names, the numbers of pages, the numbers of generations indicating copy limitations, original data and the like in association with each other. The document ID is document identification information for identifying a document. In the case of printing a new document, the print server 2 issues a document ID for the document. In the case of copying an original (an original consisting of one sheet or plural sheets) with no barcode information attached thereto, the print server 2 (or the digital multi-function peripheral 1) issues a document ID for a document including images of each original. The file name is the name of a document as electronic data. The number of pages is the total number of pages of images constituting a document. The number of generations indicating copy limitations is the number indicating copy limitations on a document. The original data is the image data as the original image on each page constituting a document.

FIG. 5 shows an exemplary configuration of the page management table 24b.

The page management table 24b stores information about an image on each page (individual images) to be printed or copied. For example, the page management table 24b stores information for identifying the image on each page, information about security settings for the image on each page, and the like.

In the example shown in FIG. 5, the page management table 24b stores page IDs, document IDs, the numbers of pages, security levels and the like in association with each other. The page ID is information by page for identifying an image on each page. The document ID is document identification information for identifying a document to which the image on the page belongs. In this system, the page ID may be information that becomes unique in combination with a document ID, or may be information that makes each image completely unique. In the case of registering a new document in the document management table 24a, the print server 2 issues a page ID for an image on each page of the document. The print server 2 registers the issued page ID in the page management table 24b.

The security level indicates the security settings for the image on the page. For example, the security level indicates the right to print (or copy) the image on the page, or the right to display the image on the page. When the security level indicates the copying right, the print server 2 determines whether the user has the right to print (or copy), in accordance with the security level. The user's level of right may be determined through user authentication by the user management server 3.

FIG. 6 shows an exemplary configuration of the print management table 24c.

The print management table 24c stores information about printing. For example, the print management table 24c stores information for identifying printing, information indicating the generation of an image on each page as a result of printing, and the like.

In the example shown in FIG. 6, the print management table 24c stores print IDs, print IDs of one generation before, the numbers of generations, page IDs, user IDs, dates and times, and the like in association with each other. The print ID is identification information for identifying printing of one time. The print ID of one generation before is the print ID of the printing that is executed immediately before the present printing (the print ID of the printing that is immediately before). The page ID is identification information of a printed image. The user ID is identification information of a user who requests printing. The date and time is the date and time of printing.

The number of generations is "0", for example, when an original is printed. A print image that is acquired in the case of copying a sheet on which the original (an image with the number of generations "0") is printed has the number of generations "1". An image that is printed (or copied) on a sheet in the case of further copying the sheet on which the print image having the number of generations "1" is printed has the number of generations "2". In this manner, the number of generations is the cumulative number of times of print for the image printed by the printing.

Next, an example of integrated print (or copy) will be described.

The digital multi-function peripheral has an integrated print function to print plural images on one sheet in an integrated manner. In this example, printing (or copying) images corresponding to N pages (N images) on one sheet in an integrated manner is referred to as N in 1 print (or N in 1 copy). For example, the digital multi-function peripheral prints, on one sheet, one image including two images laid out vertically or horizontally, as 2 in 1 print. The digital multi-function peripheral also prints, on one sheet, one image including four images arranged in four areas, that is, top left, top right, bottom left, and bottom right, as 4 in 1 print.

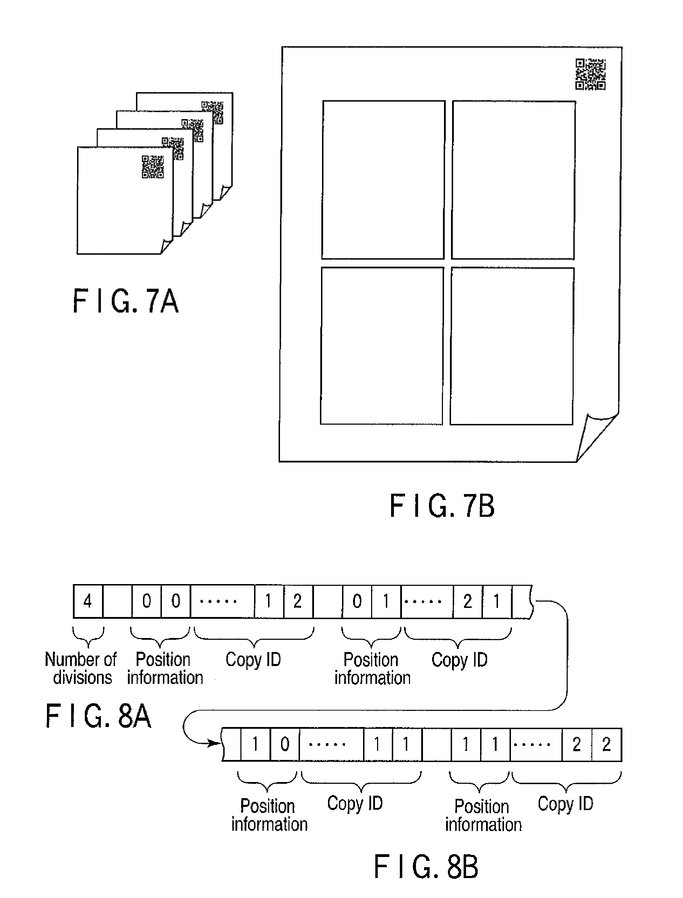

FIG. 7A shows an example of four original images. FIG. 7B shows an example where four original images are printed by 4 in 1 print.

Each original shown in FIG. 7A is a sheet on which an image corresponding to one page and barcode information indicating identification information (print ID) of the image are printed. When copying the four originals shown in FIG. 7A on one sheet (when carrying out 4 in 1 copy), the digital multi-function peripheral 1 scans images of the four originals shown in FIG. 7A by using the scanner 8. The digital multi-function peripheral 1 sends the scanned images of the four originals scanned by the scanner 8, to the print server 2.

The print server 2 generates print data including image data for 4 in 1 print in which the four original images are laid out, with barcode information that is acquired by encoding identification information for 4 in 1 print. For example, the print server 2 generates print data for 4 in 1 print in which the original data of the four original images (the original images excluding the barcode information) are laid out in four areas, that is, top left, top right, bottom left, and bottom right, and in which the barcode information acquired by encoding information including four new print IDs is attached to a top right part of the whole image, as shown in FIG. 7B. The print server 2 transmits the generated print data for 4 in 1 print to the digital multi-function peripheral 1. The digital multi-function peripheral 1 prints, on a sheet, the print data for 4 in 1 print received from the print server 2.

As shown in FIG. 7B, the print server 2 attaches one piece of barcode information to the print data for 4 in 1 print. When each of the scanned images of the four originals includes barcode information, the print server 2 extracts the barcode information from each scanned image. The print server 2 decodes (or recognizes) the extracted barcode information and determines the page ID of each image. The print server 2 specifies the original image data on the basis of the page ID of each image. The print server 2 generates an image for 4 in 1 print in which the four original images corresponding to page IDs indicated by the barcode information in the individual scanned images are laid out according to the setting contents of copy settings.

The print server 2 issues a new print ID for each image to be printed (or copied). The print server 2 creates identification information for 4 in 1 print including four print IDs for the four images. The print server 2 encodes and converts the identification information for 4 in 1 print to barcode information (barcode information for 4 in 1 print). The print server 2 combines the barcode information, acquired by encoding the identification information for 4 in 1 print, with the image for 4 in 1 print, and thus creates print data for 4 in 1.

When a print ID is issued for each image, the print server 2 registers the issued print ID in association with the identification information (page ID) of each image itself, in the print management table 24c. Moreover, the print server 2 registers the print ID of one generation before and the number of generations with respect to the image of the registered page ID in association with the print ID, in the print management table 24c. When performing N in 1 print, the print server 2 issues a print ID for each of N images to be printed and registers all the N print IDs in the print management table 24c.

FIG. 8A and FIG. 8B show an exemplary configuration of identification information for 4 in 1 print.

The identification information for 4 in 1 print includes the number of divisions (the number of integrated images) as header information, and information about each of four images (position information and print ID). In the example shown in FIG. 8A and FIG. 8B, the identification information for 4 in 1 print includes the number of divisions "4". In the example of the identification information for 4 in 1 print shown in FIG. 8A and FIG. 8B, the position information includes in the information about each of the four images is one of top left (0,0), top right (0,1), bottom left (1,0), and bottom right (1,1). In the example shown in FIG. 8A and FIG. 8B, the image at top left (0,0) has the print ID "...12". The image at top right (0,1) has the print ID "...21". The image at bottom left (1,0) has the print ID "...11". The image at bottom right (1,1) has the print ID "...22".

When the identification information for N in 1 print as shown in FIG. 8A and FIG. 8B is converted to barcode information, one piece of barcode information can indicate information about each image constituting N in 1. Consequently, even in the case of N in 1 print, it is possible to manage each image individually by attaching one piece of barcode information.

Next, a first example of processing for N in 1 print will be described.

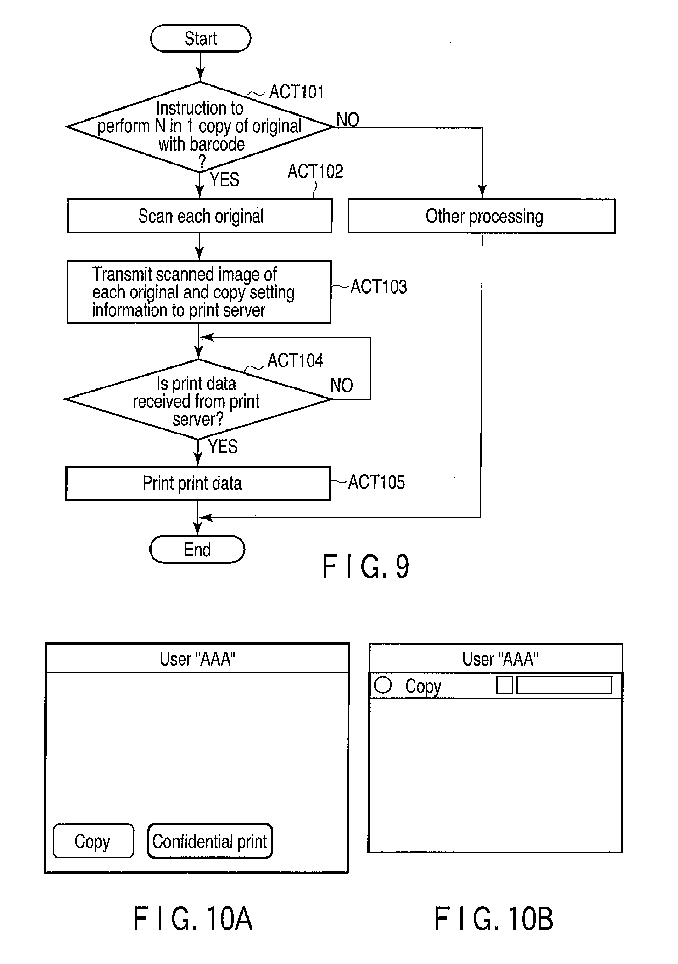

FIG. 9 is a flowchart for explaining the first example of processing for N in 1 copy in the digital multi-function peripheral 1.

First, the user sets plural originals in the scanner 8 of the digital multi-function peripheral 1, inputs copy settings including the number of integrated images, image layout information, double-side, sheet size and magnifying power by using the operation panel 7, and then gives an instruction to start copying. For example, FIG. 10A shows an exemplary operation screen in a standby state displayed on the display section 7a of the operation panel 7 when user authentication is successful. In the operation screen shown in FIG. 10A, the operation pane 17 displays a copy button and a confidential print button. As the user presses the copy button, the operation panel 7 displays a copy setting screen on the display section 7a. FIG. 10B shows an exemplary display of the copy setting screen. In a copy setting screen as shown in FIG. 10B, the user input copy settings and gives an instruction to start copying.

Here, it is assumed that the user sets plural originals (which may be a one-sheet original on which images corresponding plural pages are printed in an integrated manner) on which barcode information is printed, in the scanner 8, and inputs an instruction to start N in 1 copy via the operation panel 7. The system control unit 10 receives the N in 1 copy start instruction inputted by the user, from the operation panel 7 (ACT 101). When the N in 1 copy start instruction is received, the processor 11 of the system control unit 10 scans each original in the order they were stacked by the user, with the scanner 8 (ACT 102). The processor 11 of the system control unit 10 transmits the scanned image of each original scanned by the scanner 8 and the information indicating the copy settings (copy setting information) to the print server 2 (ACT 103).

After transmitting the scanned images of the plural originals to be copied, the digital multi-function peripheral 1 waits for reception of print data (PJL) from the print server 2 (ACT 104). When print data is received from the print server 2 in the print data reception waiting state, the processor 11 of the system control unit 10 prints the received print data on a sheet by using the printer 9 (ACT 105).

Here, the digital multi-function peripheral 1 receives the print data to be outputted as N in 1 copy, from the print server 2. That is, the digital multi-function peripheral 1 realizes N in 1 copy via the print server 2. The digital multi-function peripheral 1 may also be configured to transmit scanned images to the print server 2 and receive print data from the print server 2 only in the case of copying an original on which barcode information is printed.

Next, a first example of processing in the print server 2 will be described.

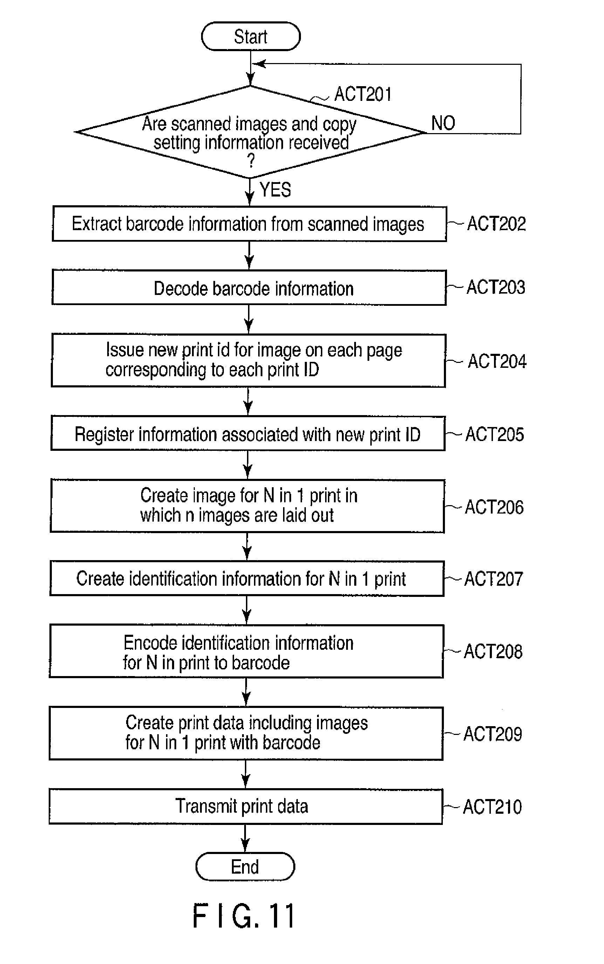

FIG. 11 is a flowchart for explaining the first example of processing for N in 1 copy in the print server 2. In the first example of processing, the operation of the print server 2 where the digital multi-function peripheral scans plural originals and carries out N in 1 copy will be described.

The print server 2 receives scanned images of the originals including barcode information, and copy setting information, from the digital multi-function peripheral 1 (ACT 201). Each image to be printed may be an image acquired by scanning plural originals in which an image corresponding to one page is printed on one original each, an image acquired by scanning an original on which images corresponding to plural pages are printed in an integrated manner, or an image acquired by scanning plural originals including both.

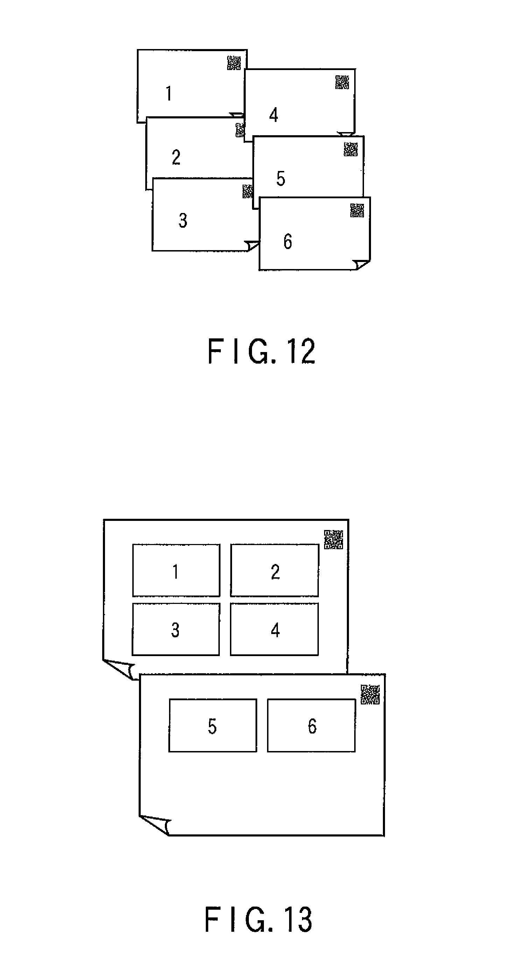

For example, FIG. 12 shows an exemplary original including six images printed on six sheets, respectively. Each of the images acquired by scanning the six originals shown in FIG. 12 includes an image corresponding to one page and barcode information. FIG. 13 shows an exemplary original including two sheets on which six images are printed by 4 in 1 print. FIG. 13 shows the first sheet of the original on which images corresponding to four pages and one piece of barcode information are printed, and the second sheet of the original on which images corresponding to two pages and one piece of barcode information are printed. The image acquired by scanning the first sheet of the original shown in FIG. 13 includes images corresponding to four pages and one piece of barcode information. The one piece of barcode information included in the scanned image on the first sheet of the original on which the images corresponding to the four pages are printed in an integrated manner is information acquired by encoding information including four print IDs for the images corresponding to the four pages. The image acquired by the scanning the second sheet of the original shown in FIG. 13 includes images corresponding to two pages and one piece of barcode information. The one piece of barcode information included in the scanned image of the second sheet of the original on which the images corresponding to the two pages are printed in an integrated manner is information acquired by encoding information including two print IDs for the images corresponding to the two pages.

When the scanned images and copy setting information are received, the processor 21 of the print server 2 extracts the barcode information (barcode image) from each scanned image, using an image analysis function (ACT 202). As the barcode information is extracted from each scanned image, the processor 21 decodes each piece of barcode information that is extracted, using a barcode processing function (ACT 203). Each piece of barcode information includes information for identifying each image. For example, the barcode information includes a print ID. The print ID is identification information that is issued every time one image (an image corresponding to one page) is printed.

When the six sheets of the original shown in FIG. 12 are scanned, the processor 21 of the print server 2 decodes the print ID corresponding to each image from the barcode information extracted from each of the scanned images of the six sheets of the original. When the two sheets of the original shown in FIG. 13 are scanned, the processor 21 of the print server 2 decodes the four print IDs for the images corresponding to the four images from the barcode information extracted from the scanned image of the first sheet of the original and then decodes the two print IDs for the images corresponding to the two pages from the barcode information extracted from the scanned image of the two sheets of the original.

The processor 21 of the print server 2 searches the print management table 24c and thus can determine the information (page ID of the image, print ID of one generation before, the number of generations, user ID, date and time, and the like) stored in association with one print ID. The processor 21 of the print server 2 also searches the page management table 24b and the document management table 24a using the page ID as a key, and thus can determine the information (security level, the number indicating copy limitations and the like) about the image.

After decoding the barcode information extracted from the scanned images, the processor 21 of the print server 2 issues a new print ID for each image (image on each page) to be printed (ACT 204). The processor 21 registers all the newly issued print IDs in the print management table 24c (ACT 205). The processor 21 also registers the information (page ID, print ID of one generation before, the number of generations, user ID, date and time, and the like) corresponding to each print ID that is registered, in the print management table 24c.

When all the print IDs are registered in the print management table 24c, the processor 21 of the print server 2 determines the document ID of each image on the basis of the print management table 24c and the page management table 24b. When the document ID is determined, the processor 21 acquires the original image data corresponding to each image from the document management table 24a. As the original image data corresponding to all the images to be printed are acquired, the processor 21 generates an image for N in 1 print in which N image data each, of the acquired original image data, are laid out in one image, on the basis of the copy setting information (ACT 205).

The processor 21 creates identification information for N in 1 print including N print IDs for the N images to be printed on one sheet (ACT 207). The identification information for N in 1 print is information including the number of images integrated (N) and information about each of the N images (for example, information indicating the layout position of each image, and print ID). For example, in the case of 4 in 1 copy, the processor 21 creates identification information for 4 in 1 copy including four print IDs for four images to be printed on one sheet. When the identification information for N in 1 print is created, the processor 21 encodes the created identification information for N in 1 print to one piece of barcode information (ACT 208).

In the case of printing images corresponding to only a part of the pages in N in 1 print, the processor 21 may create identification information for N in 1 print in which empty data is embedded, as information indicating that the image should not be printed. Meanwhile, in the case of copying an image corresponding to one page on one sheet, the processor 21 may use one print ID as identification information for print.

The processor 21 forms print data (PJL) in which the barcode information acquired by converting the identification information for N in 1 print to a barcode is arranged in the image for N in 1 print (the print image and the barcode image are combined) (ACT 209). The processor 21 of the print server 2 transmits the formed print data to the digital multi-function peripheral 1 (ACT 210).

According to the above first example of processing, in the case of printing N images on one sheet in an integrated manner, one piece of barcode information including N pieces of identification information for the N images to be printed on each sheet is generated, and the generated one piece of barcode information is printed together with the N images on one sheet. The print server 2 or the digital multi-function peripheral 1 can individually identify and manage the N images printed on the sheet by decoding the one piece of barcode information printed together with the N images on the one sheet.

A part or all of the processing (ACT 201 to ACT 210) executed by the print server 2 may be executed by the digital multi-function peripheral 1. The processing of ACT 201 to ACT 210 represents a function that can be realized by the execution of a program by the processor. Therefore, the processing of ACT 201 to ACT 210 can be executed by the processor 11 of the digital multi-function peripheral 1. As the processor 11 of the digital multi-function peripheral 1 executes the processing of ACT 201 to ACT 210, the first example of processing for N in 1 print can be realized singly by the digital multi-function peripheral 1.

Next, a second example of processing for N in 1 print will be described.

In the second example of processing for N in 1 print, the digital multi-function peripheral 1 scans plural images, transmits the scanned images and copy setting information to the print server 2, and receives print data from the print server 2, as in the first example of processing.

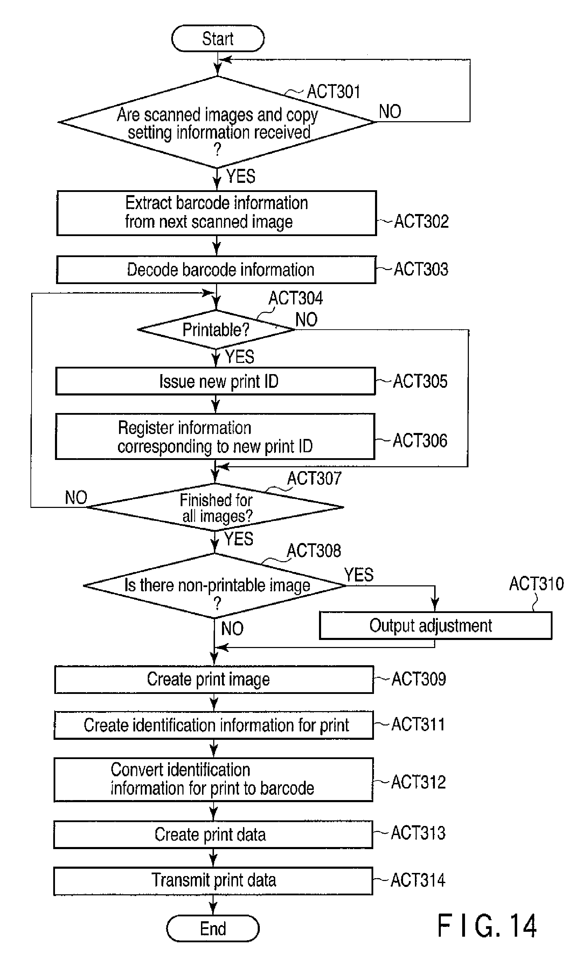

FIG. 14 is a flowchart for explaining the second example of processing for N in 1 print in the print server 2.

The print server 2 receives scanned images of originals including barcode information, and copy setting information, from the digital multi-function peripheral 1 (ACT 301). The scanned images of the originals may be images acquired by scanning originals in which an image corresponding to each page is printed on one sheet each as shown in FIG. 12, or may be images acquired by scanning originals in which images corresponding to plural pages are printed in an integrated manner as shown in FIG. 13.

When the scanned images of the originals and the copy setting information are received, the processor 21 of the print server 2 extracts the barcode information (barcode image) from each scanned image, using the image analysis function (ACT 302). When the barcode information is extracted from each scanned image, the processor 21 decodes all the extracted barcode information, using the barcode processing function (ACT 303). Each piece of the barcode information includes information (for example, print ID) for identifying each image included in the scanned images of the originals. The processor 21 determines whether print (or copy) can be made or not, for all the images included in the scanned images of the originals. To this end, the processor 21 may temporarily store all the images of the print IDs included in the information acquired by decoding each piece of barcode information extracted from each scanned image, in a memory such as the RAM 22.

After decoding the barcode information extracted from the scanned images of the originals, the processor 21 of the print server 2 determines whether print (or copy) can be made or not, for the image of each print ID included in the information acquired by decoding the barcode information (ACT 304). The processor 21 determines whether print (or copy) can be made or not, on the basis of the number of generations of the image corresponding to each print ID or the security level or the like.

For example, in the case of determining whether print can be made or not on the basis of the number of generations of the image, the processor 21 compares the number of generations of the print ID decoded from the barcode information with the number of generations indicating limitations corresponding to the document ID to which the page of this image belongs, and thus determining whether print can be made or not. The processor 21 determines the number of generations of the print ID decoded from the barcode information on the basis of the print management table 24c. The processor 21 determines the page ID of the image corresponding to this print ID on the basis of the print management table 24c. The processor 21 determines the document ID to which the image of this page ID belongs on the basis of the page management table 24b. The processor 21 determines the number of generations indicating limitations corresponding to the document ID to which the image of the page ID corresponding to this print ID belongs on the basis of the document management table 24a.

Meanwhile, in the case of determining whether print (or copy) can be made or not on the basis of the security level, the processor 21 compares the level of right held by a user in the log-in state (a user who is successfully authenticated) with the security level of the image, and thus determines whether print can be made or not. The print server 2 receives the user's level of right as a result of user authentication from the user management server 3. The processor 21 determines the page ID of the image corresponding to the print ID acquired by decoding the barcode information on the basis of the print management table 24c. The processor 21 determines the security level of the image of this page ID on the basis of the page management table 24b.

When it is determined that print (or copy) of an image corresponding to one print ID can be made (YES in ACT 304), the processor 21 assumes that the image corresponding to this print ID is an image to be printed, and thus issues a new print ID (ACT 305). As the new print ID is issued, the processor 21 registers the new print ID and the information about this print ID (page ID, print ID of one generation before, the number of generations, user ID, date and time, and the like) in the print management table 24c (ACT 306).

Meanwhile, when it is determined that print (or copy) of an image corresponding to one print ID cannot be made, the processor 21 stores the information indicating the image of this print ID in a memory such as the RAM 22.

The processor 21 executes the processing of ACT 304, ACT 305 and ACT 306 to the images of all the print IDs acquired from all the barcode information extracted from the scanned images of the originals (ACT 307). After determining whether print can be made or not with respect to the images of all the print IDs (YES in ACT 307), the processor 21 determines whether the scanned images of the originals include an image that is determined as non-printable or not (ACT 308).

When it is determined that there is no images that are determined as non-printable, that is, when it is determined that all the images can be printed (NO in ACT 308), the processor 21 generates an image for N in 1 print that should be printed by N in 1 print (ACT 309). The processor 21 of the print server 2 acquires the original image data corresponding to each image that is determined as printable. The processor 21 specifies the original image data of each image on the basis of the print management table 24c, the page management table 24b and the document management table 24a. The processor 21 generates an image for N in 1 print in which the original image data of each image that is determined as printable is laid out on the basis of the copy setting information.

Meanwhile, when it is determined that there is an image that is determined as non-printable (YES in ACT 308), the processor 21 carries out output adjustment to adjust the print image that should be printed, in consideration of the image determined as non-printable (ACT 310). That is, when there is an image that is determined as non-printable, the processor 21 generates an image for N in 1 print based on the output adjustment in which information indicating the non-printable image is added to the print image or the layout of images that are determined as printable is adjusted. An example of the output adjustment will be described later.

As the output adjustment is carried out, the processor 21 generates a print image based on the result of the output adjustment (ACT 309). For example, when an image that should be printed is selected by the output adjustment, the processor 21 generates a print image in which the original image data corresponding to each image determined as an image that should be printed by the output adjustment is arranged. Also, when it is determined that the layout should be changed by the output adjustment, the processor 21 generates a print image in which an image that should be printed in the layout decided by the output adjustment is arranged.

When the print image is generated, the processor 21 creates identification information for print including all the print IDs for all the images included in the print image, for each print image to be printed on one sheet (ACT 311). The identification information for print is information including the number of images integrated and information about each image (for example, information indicating the position of the image and print ID). As the identification information for print is created, the processor 21 encodes the created identification information for print to one piece of barcode information (ACT 312).

When the print image and the barcode information corresponding to this image are created, the processor 21 forms print data (PJL) in which the barcode information acquired by converting the identification information for print to a barcode is arranged in the print image (the print image and the barcode information are combined) (ACT 313). The processor 21 of the print server 2 transmits the formed print data to the digital multi-function peripheral 1 (ACT 314).

In the second example of processing, in the case of printing N images on one sheet in an integrated manner, the print server 2 determines whether print (or copy) can be made or not with respect to each image. When there is an image that is determined as non-printable, the print server 2 generates an image for N in 1 print in which each image is laid out while adjusting by the output adjustment. The print server 2 generates one piece of barcode information including identification information of each image included in the image for N in 1 print, and generates print data in which the one piece of barcode information is added to the image for N in 1 print. According to the second example of processing, when there is a non-printable image, print data that is adjusted according to the non-printable image can be generated.

A part or all of the processing (ACT 301 to ACT 314) executed by the print server 2 may be executed by the digital multi-function peripheral 1. The processing of ACT 301 to ACT 314 represents a function that can be realized by the execution of a program by the processor. Therefore, the processing of ACT 301 to ACT 314 can be executed by the processor 11 of the digital multi-function peripheral 1. As the processor 11 of the digital multi-function peripheral 1 executes the processing of ACT 301 to ACT 314, the second example of processing for N in 1 print can be realized singly by the digital multi-function peripheral 1. Next, the output adjustment will be described. First, first output adjustment will be described.

In the first output adjustment, the processor 21 replaces an image that is determined as non-printable with an image indicating non-printability. When the image that is determined as non-printable is replaced with the image indicating non-printability in the first output adjustment, the processor 21 lays out N images (printable images and the image indicating non-printability) according to the setting information for N in 1 print (for example, information indicating the layout of the N images) and thus generates an image for N in 1 print.

In the image for N in 1 print that is generated using the plural images adjusted by the first output adjustment, the image that is determined as non-printable, too, is arranged in the image layout area in N in 1 print. Therefore, according to the first output adjustment, a print image can be generated in which printable images, of all the images included in the scanned images of originals, are still arranged according to the layout that is defined by the setting information. Moreover, according to the first output adjustment, an image indicating non-printability can be arranged in the area where an image determined as non-printable should be arranged in the print image.

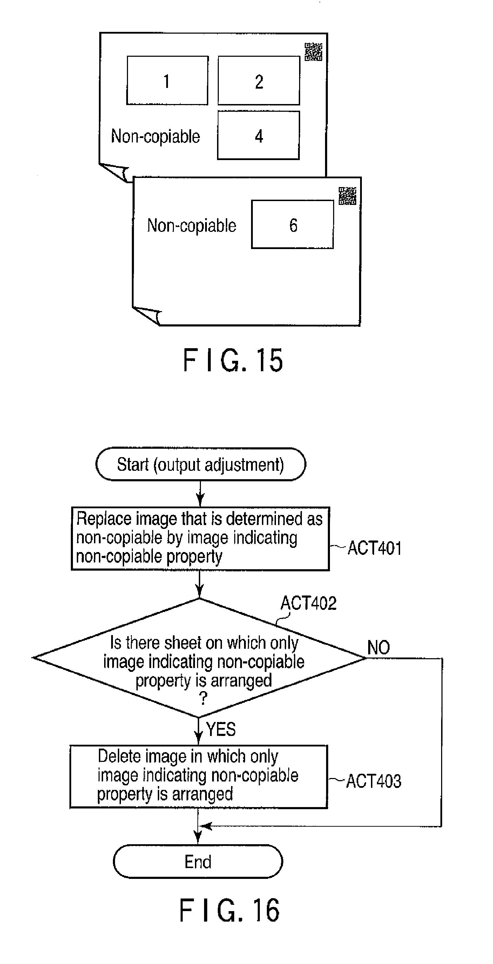

FIG. 15 shows an exemplary result of output based on copy processing including the first output adjustment. FIG. 15 shows an exemplary result of copy images on pages 3 and 5 are determined as non-copiable in 4 in 1 copy of images corresponding to six pages. In the example of 4 in 1 copy shown in FIG. 15, the print server 2 replaces the image that is determined as non-copiable with an image indicating the non-copiable property, as the output adjustment. The print server 2 generates an image for 4 in 1 print in which images that are determined as copiable and the image indicating the non-copiable property are laid out. From the result of copy shown in FIG. 15, the user can easily conjecture the image that is determined as non-printable.

When the print image to be printed on the final sheet is only an image indicating non-printability, that is, when the image to be printed on the final sheet include no printable images, the print server 2 may delete the print image that should be printed on the final sheet.

FIG. 16 is a flowchart for explaining the first output adjustment.

Hereinafter, an example of the first output adjustment will be described with reference to FIG. 16, assuming the case where scanned images in N in 1 copy include an image that is determined as non-copiable.

The processor 21 replaces an image that is determined as non-copiable with an image indicating the non-copiable property as the first output adjustment (ACT 401). The image indicating the non-copiable property may be a character string "non-copiable", as shown in FIG. 15. The image indicating the non-copiable property may also be a symbol, watermark or pattern that indicates the non-copiable property.

When the image determined as non-copiable is replaced with the image indicating the non-copiable property, the processor 21 determines whether or not there is a print image whose actual printing should be omitted (an image that need not be printed) when each image is arranged (ACT 402). For example, the processor 21 determines that a print image consisting only of an image indicating the non-copiable property (not including copiable images), of a print image to be printed on each sheet, is an image that need not be printed. As the processing of ACT 402, the processor 21 may also determine whether a print image to be printed on the final sheet (a print image in which images on the final page are arranged) is a print image consisting only of an image indicating the non-copiable property (not including copiable images) or not.

When it is determined that there is a print image that need not be printed (YES in ACT 402), the processor 21 deletes the print image that need not be printed (ACT 403). The processing of ACT 402 and ACT 403 may be omitted. The user may also be enabled to set whether to execute the processing of ACT 402 and ACT 403 or not.

In the above first output adjustment, the print server 2 can generate a print image in which copiable images, of all the images inputted as print targets, are arranged according to the layout defined by the setting information, and in which an image indicating non-printability is arranged in the area where an image determined as non-copiable should be arranged. According to the first output adjustment, the user can easily recognize the image that is determined as non-copiable from the result of copy.

Next, second output adjustment will be described.

In the second output adjustment, the processor 21 deletes an image that is determined as non-printable. When deleting the image determined as non-printable, the processor 21 lays out all the images except the image determined as non-printable (images that are determined as printable) according to the copy setting information (for example, layout order) and thus generates an image for N in 1 print.

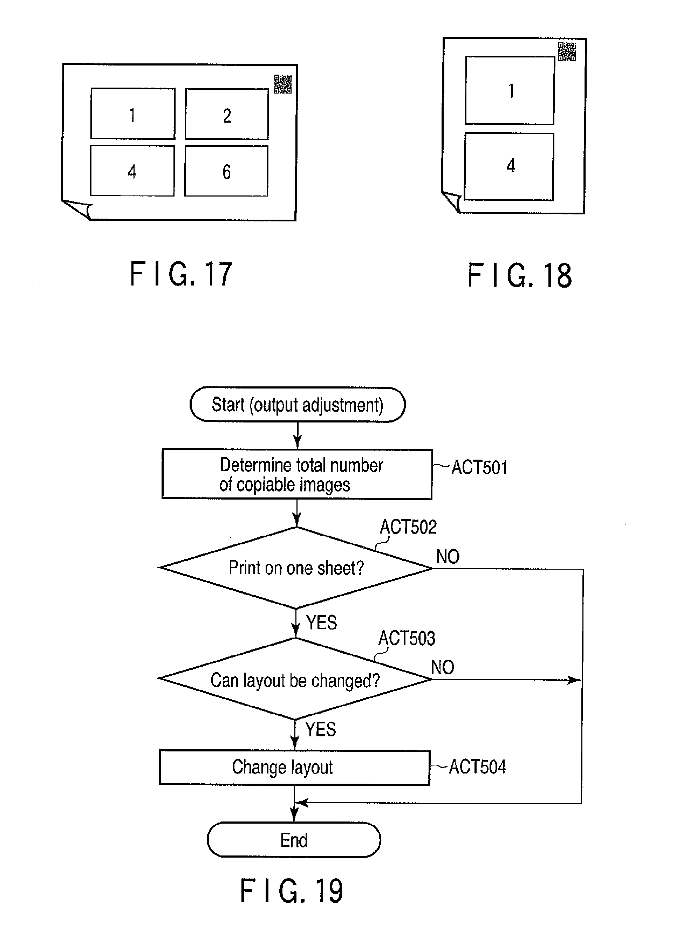

FIG. 17 shows an exemplary result of output based on copy processing including the second output adjustment. FIG. 17 shows an exemplary result of copy images on pages 3 and 5 are determined as non-printable in 4 in 1 copy of images corresponding to six pages. In the example of 4 in 1 copy shown in FIG. 17, the print server 2 deletes the image that is determined as non-copiable, as the output adjustment. The print server 2 generates an image for 4 in 1 print in which only the images that are determined as copiable are laid out. According to the result of copy shown in FIG. 17, the user can acquire N in 1 copy in which only copiable images are laid out.

Next, third output adjustment will be described.

The third output adjustment is a modification of the second output adjustment. In the third output adjustment, the processor 21 deletes the image that is determined as non-printable, and changes the image for N in 1 print to a layout corresponding to the number of images that are determined as printable. When changing to the layout corresponding to the number of images that are determined as printable, the processor 21 determines whether the layout can be changed according to the number of printable images or not. When it is determined that the layout can be changed, the processor 21 generates a print image in which the printable images are arranged in the layout that is changed according to the number of images.

FIG. 18 shows an exemplary result of output based on copy processing including third output adjustment. FIG. 18 shows an exemplary result of copy the images on pages 2, 3, 5 and 6 are determined as non-printable in 4 in 1 copy of images corresponding to six pages. The result of copy shown in FIG. 18 is a layout of 2 in 1 print. The print server 2 deletes the images on pages 2, 3, 5 and 6, of the images corresponding to six pages. The copiable images correspond to two pages, that is, the image on the first page and the image on the fourth image. Since the number of images determined as copiable is two, the print server 2 determines the layout can be changed from 4 in 1 to 2 in 1 print. The print server 2 generates a print image in which the image on the first page and the image on the fourth image are arranged. According to the example shown in FIG. 18, the user can acquire a copy result in which only the copiable images are laid out in a balanced manner.

FIG. 19 is a flowchart for explaining the second output adjustment and the third output adjustment.

Hereinafter, an example of the second and third output adjustment will be described with reference to FIG. 19, assuming the case where scanned images in N in 1 copy includes an image that is determined as non-copiable.

The processor 21 deletes the image that is determined as non-copiable and determines the total number of copiable images, as the second and third output adjustment (ACT 501). The processor 21 determines whether the total number of sheets to be outputted (the total number of sheets to be printed) is one or not when the copiable images are arranged in a layout of N in 1 print (ACT 502).

When the total number of sheets to be printed is one (YES in ACT 502), the processor 21 determines whether the layout can be changed or not (ACT 503). The processor 21 determines whether or not the layout can be changed according to the total number of copiable images. For example, the processor 21 determines whether the number of images is equal to and smaller than the number of images (N-α) in (N-α) in 1 copy having the second smallest number of integrated images next to the number of integrated images in N in 1 copy.

As a specific example, in a system where layouts of 2 in 1, 4 in 1, 6 in 1, 8 in 1, and 16 in 1 are possible, the processor 21 determines that the layout can be changed when the total number of copiable images in 2 in 1 copy is one, when the total number of copiable images in 4 in 1 copy is two or less, when the total number of copiable images in 6 in 1 copy is four or less, when the total number of copiable images in 8 in 1 copy is six or less, and when the total number of copiable images in 16 in 1 copy is eight or less.

When it is determined by the above determination that the layout can be changed, the processor 21 decides a layout corresponding to the total number of copiable images (ACT 504). For example, when the total number of copiable images in 4 in 1 copy is two, the processor 21 changes the layout to 2 in 1 print. As the layout corresponding to the total number of copiable images is decided, the processor 21 changes the layout as a result of processing of the output adjustment and generates a print image in which the copiable images are arranged in the changed layout.

In the example of processing shown in FIG. 19, when it is determined in ACT 502 that the total number of sheets to be printed is one, the processor 21 executes the processing of ACT 503 and ACT 504. This processing aims at balancing the document as a whole based on the idea below. When one sheet is the result of print, it can be considered that the document is well-balanced as a whole even with a changed layout. When plural sheets are the result of print, it can be considered that the document is not well-balanced as a whole where the layout of images on the first sheet is different from the layout of images on the final sheet. Therefore, technically, the processor 21 may omit the processing of ACT 502. When omitting ACT 502, the processor 21 may executes the processing of ACT 503 and ACT 504, targeting the group of images to be printed on the final sheet.

Whether the layout can be changed or not may also be determined according to other copy setting information than the number of integrated images. For example, the processor 21 may determine whether the layout can be changed or not on the basis of the combination of the number of integrated images and copy setting information such as double-side. As a specific example, when it is determined that the total number of copiable images in double-side 4 in 1 copy is four, the processor 21 may arrange the four images as double-side 2 in 1 print. Meanwhile, when it is determined that the total number of copiable images in double-side 4 in 1 copy is two, the processor 21 select either single-side 2 in 1 copy or double-side copy in which one image each is arranged on both sides, according to user's selection.

The change in the layout may be prohibited by user's setting. When the prohibition of change in the layout according to the total number of images is set by the user, the processor 21 determines in ACT 503 that the layout cannot be changed, irrespective of the total number of images. In this image forming system, copy can be executed in the layout designated by the user even when the total number of copiable images is small.

The digital multi-function peripheral 1 may execute a part or all of the output adjustment executed by the print server 2 (ACT 401 to ACT 403 or ACT 501 to ACT 504). The processing of ACT 401 to ACT 403 or ACT 501 to ACT 504 represents a function that can be realized by the execution of a program by the processor. Therefore, the processing of ACT 401 to ACT 403 or ACT 501 to ACT 504 can be executed by the processor 11 of the digital multi-function peripheral 1. As the processing of ACT 401 to ACT 403 or ACT 501 to ACT 504 is executed by the processor 11 of the digital multi-function peripheral 1, the example of processing for N in 1 print including the output adjustment can also be realized singly by the digital multi-function peripheral 1.

As described above, in the image forming system according to the example, identification information is issued to each of plural images as targets of integrated print. A print image for each sheet where images corresponding to the number of integrated images are arranged is created. A barcode image including the identification information of all the images included in the print image is created. The barcode image is added to the print image and the image is formed on the sheet. The number of times of image formation of each image is stored in the print management table in association with the identification information of each image. According to the above example, an image forming apparatus, an image forming system and an image formation management method can be provided that enable easy management of each image even in the case of printing plural images on one sheet in an integrated manner.

Moreover, in the image forming system according to the example, the number of times indicating print limitations (the number of generations indicating print limitations) for each image is stored in the management table. It is then determined whether the number of times of print (the number of generations) of each image as a target of integrated print exceeds the number of times indicating limitations or not. A print image in which images that do not exceed the number of times indicating limitations are arranged is created. According to the example, an image forming apparatus, an image forming system and an image formation management method can be provided that enable confirmation of limitations on the number of times of print of each image and prohibition of print of an image which exceeds the number of times indicating print limitations, even in the case of printing plural images on one sheet in an integrated manner.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An image forming apparatus **characterized by** comprising:
an acquisition unit (ACT201) which acquires plural images;
an issuing unit (ACT204, ACT305) which issues identification information for each image acquired by the acquisition unit;
an image creating unit (ACT206, ACT309) which creates one image for image formation in which the plural images for which the identification information is issued by the issuing unit are arranged;
a code creating unit (ACT208, ACT312) which creates one code image by encoding information including plural pieces of identification information for the plural images arranged in the image for image formation;
a first storage unit (24c, ACT205, ACT306) which stores the number of times of image formation for each image arranged in the image for image formation, in association with the identification information for each image issued by the issuing unit; and
an image forming unit (9, ACT209, ACT313, ACT105) which forms an image including the image for image formation and the code image on one sheet.

2. The apparatus of claim 1, **characterized by** further comprising a second storage unit (24a) which stores the number of times indicating print limitation on each image,
wherein the issuing unit issues new identification information for each image having the number of times of image formation that does not exceed the number of times indicating limitation on the each image, of the plural images acquired by the acquisition unit, and
the image creating unit creates an image for image formation in which the plural images for which the new identification information is issued by the issuing unit are arranged.

3. The apparatus of claim 2, **characterized by** further comprising an output adjustment unit (ACT301) which replaces each image having the number of times of image formation that exceeds the number of times indicating limitation on the each image, of the plural images acquired by the acquisition unit, with an image indicating non-printability,
wherein the image creating unit creates an image for image formation in which the plural images for which the new identification information is issued by the issuing unit and the image indicating non-printability are arranged.

4. The apparatus of claim 2, **characterized by** further comprising an output adjustment unit (ACT301) which deletes each image having the number of times of image formation that exceeds the number of times indicating limitation on the each image, of the plural images acquired by the acquisition unit,
wherein the image creating unit creates an image for image formation in which only the plural images for which the new identification information is issued by the issuing unit are arranged.

5. The apparatus of claim 4, **characterized in that** the output adjustment unit further determines whether or not to change a layout of each image having the number of times of image formation that does not exceed the number of times indicating limitation, and
the image creating unit creates an image for image formation in which only the plural images for which the new identification information is issued by the issuing unit are arranged in a layout decided by the output adjustment unit.

6. The apparatus of claim 1, **characterized by** further comprising:
a scanner (8) which scans an image of an original; and
a code recognition unit (ACT202-203, ACT302-303) which, on the basis of a code image included in a scanned image of the original scanned by the scanner, decodes the identification information for each image included in the scanned image;
wherein the acquisition unit acquires an image on each page included in the scanned image of the original scanned by the scanner, as plural images; and
the first storage unit stores the number of times of image formation for each image arranged in the image for image formation and original identification information for each image acquired by decoding the code image by the code recognition unit, in association with the identification information of each image that is newly issued by the issuing unit.

7. The apparatus of claim 6, **characterized by** further comprising a second storage unit (24a) which stores the number of times indicating print limitation on each image,
wherein the issuing unit issues new identification information for each image having the number of times of image formation that does not exceeds the number of times indicating limitation, of the plural images acquired by the acquisition unit, and
the image creating unit creates an image for image formation in which the plural images for which the new identification information is issued by the issuing unit are arranged.

8. An image forming system **characterized by** comprising a server (2) and an image forming apparatus (1),
the server comprising:
an acquisition unit (ACT201) which acquires plural images;
an issuing unit (ACT204, ACT304) which issues identification information for each image acquired by the acquisition unit;
an image creating unit (ACT206, ACT309) which creates one image for image formation in which the plural images for which the identification information is issued by the issuing unit are arranged;
a code creating unit (ACT208, ACT312) which creates one code image by encoding information including plural pieces of identification information for the plural images arranged in the image for image formation; and
a first storage unit (24c, ACT205, ACT306) which stores the number of times of image formation for each image arranged in the image for image formation, in association with the identification information for each image issued by the issuing unit,
the image forming apparatus comprising:
an image forming unit (9) which forms an image including the image for image formation and the code image on one sheet.

9. The system of claim 8, **characterized in that** the server further comprises a second storage unit (24a) which stores the number of times indicating print limitation on each image,
the issuing unit issues new identification information for each image having the number of times of image formation that does not exceed the number of times indicating limitation on the each image, of the plural images acquired by the acquisition unit, and
the image creating unit creates an image for image formation in which the plural images for which the new identification information is issued by the issuing unit are arranged.

10. The system of claim 9, **characterized in that** the server further comprises an output adjustment unit (ACT301) which replaces each image having the number of times of image formation that exceeds the number of times indicating limitation on the each image, of the plural images acquired by the acquisition unit, with an image indicating non-printability, and
the image creating unit creates an image for image formation in which the plural images for which the new identification information is issued by the issuing unit and the image indicating non-printability are arranged.

11. The system of claim 9, **characterized in that** the server further comprises an output adjustment unit (ACT301) which deletes each image having the number of times of image formation that exceeds the number of times indicating limitation on the each image, of the plural images acquired by the acquisition unit, and
the image creating unit creates an image for image formation in which only the plural images for which the new identification information is issued by the issuing unit are arranged.

12. The system of claim 11, **characterized in that** the output adjustment unit further determines whether or not to change a layout of each image having the number of times of image formation that does not exceed the number of times indicating limitation, and
the image creating unit creates an image for image formation in which only the plural images for which the new identification information is issued by the issuing unit are arranged in a layout decided by the output adjustment unit.

13. The system of claim 8, **characterized in that** the image forming apparatus further comprises a scanner (8) which scans an image of an original,
the server further comprises a code recognition unit (ACT202-203, ACT302-303) which, on the basis of a code image included in a scanned image of the original scanned by the scanner of the image forming apparatus, decodes the identification information for each image included in the scanned image,
the acquisition unit acquires an image on each page included in the scanned image of the original, as plural images, from the image forming apparatus, and
the first storage unit stores the number of times of image formation for each image arranged in the image for image formation and original identification information for each image acquired by decoding the code image by the code recognition unit, in association with the identification information of each image that is newly issued by the issuing unit.

14. The system of claim 13, **characterized in that** the server further comprises a second storage unit (24a) which stores the number of times indicating print limitation on each image,
the issuing unit issues new identification information for each image having the number of times of image formation that does not exceeds the number of times indicating limitation, of the plural images acquired by the acquisition unit, and
the image creating unit creates an image for image formation in which the plural images for which the new identification information is issued by the issuing unit are arranged.

15. A management method for image formation **characterized by** comprising:
acquiring (ACT201) plural images;
issuing (ACT204, ACT305) identification information for each image that is acquired;
creating (ACT206, ACT309) one image for image formation in which the plural images for which the identification information is issued are arranged;
creating (ACT208, ACT312) one code image by encoding information including the plural pieces of identification information for the plural images arranged in the image for image formation;
storing (ACT205, ACT306) the number of times of image formation for each image arranged in the image for image formation, in association with the issued identification information for each image; and
forming (ACT209, ACT313, ACT105) an image including the image for image formation and the code image on one sheet.
